(19) Europäisches Patentamt
European Patent Office
Office européen des brevets

(11) Publication number: **0 271 296 B1**

(12) **EUROPEAN PATENT SPECIFICATION**

(45) Date of publication of patent specification: **20.01.93**

(51) Int. Cl.$^5$: **C09K 3/10**, C09D 5/34

(21) Application number: **87310688.4**

(22) Date of filing: **04.12.87**

# (54) Syntactic sealants.

(30) Priority: **09.12.86 US 939924**

(43) Date of publication of application:
**15.06.88 Bulletin 88/24**

(45) Publication of the grant of the patent:
**20.01.93 Bulletin 93/03**

(84) Designated Contracting States:
**BE DE FR GB**

(56) References cited:
**DE-A- 2 621 115**
**DE-A- 3 100 746**
**FR-A- 2 229 751**
**FR-A- 2 415 132**

(73) Proprietor: **DOW CORNING CORPORATION**
**3901 S. Saginaw Road**
**Midland Michigan 48686-0995(US)**

(72) Inventor: **Dietlein, John Earl**
**528 Webb Drive**
**Bay City Michigan(US)**

(74) Representative: **Laredo, Jack Joseph et al**
**Elkington and Fife Prospect House 8 Pembroke Road**
**Sevenoaks, Kent TN13 1XR(GB)**

**EP 0 271 296 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to syntactic sealants which have reduced specific gravity while still possessing other useful sealant properties.

Sealant compositions are well known and are useful in filling cracks and voids in structures such as buildings. There are many kinds of sealants, both curing and non-curing kinds. The sealants of the present invention are of the curing type and specifically are silicone sealants which cure at room temperature. The silicone sealants can be either one package or two package types. One package type silicone sealants are those in which the ingredients are mixed and placed in one package for storage and shipment. When cure is desired for the one package silicone sealants, the composition is extruded from the package and when it contacts moisture, cure takes place. Two package type silicone sealants are those in which the reactive ingredients are kept in separate packages until cure is desired, because if the ingredients of the two packages are mixed, cure begins. When cure is desired for two package compositions, the contents of two packages are blended resulting in a mixture which cures at room temperature.

Silicone sealants are expensive, but have properties which makes them desirable for many applications, Because of the silicone sealants ability to remain functional over many years of outside exposure, they have found utility in the building construction trade. However, these room temperature curing silicone sealants would be even more desirable, if their cost could be reduced. Many of the ways to reduce the cost results in substantial changes in the properties of the silicone sealants. Unfortunately, the changes have been undesirable, rather than beneficial. Therefore, means for reducing the cost without substantially changing the properties undesirable are sought. One means considered for reducing the cost is the addition of fillers. However, many fillers are expensive themselves and increase the specific gravity so that the cost/volume is not favorable, or the physical and chemical properties are deteriorated to a point which makes the silicone sealant unacceptable in the building construction applications.

An object of the present invention is to provide a sealant which has a lower specific gravity and acceptable properties. A reduction in the cost/volume of the silicone sealant is a further objective.

According to one aspect of the present invention thus is provided (claim 1).

According to another aspect of the present invention there is provided (claim 6)

The filled polyorganosiloxane sealant compositions used to make the syntactic sealant compositions of the present invention can either be one package or two package types which are curable at room temperature. These are sealant compositions which are well known in the art. Such sealant compositions comprise polyorganosiloxane which is endblocked with hydroxyl groups or hydrolyzable groups, a crosslinker which contains hydrolyzable groups, a filler, and optionally a curing agent. The syntactic sealant compositions of the present invention comprise the filled polyorganosiloxane sealant composition, from 3 to 10 weight percent of ceramic microspheres, and 2 to 15 weight percent organic solvent.

The ceramic microspheres are those which have a true specific gravity of less than 1000 $kg/m^3$, preferably less than 800 $kg/m^3$; a bulk density of less than 500 $kg/m^3$; and an average particle diameter of less than 500 micrometers, preferably less than 300 micrometers. Ceramic microspheres are commercially available, such as Q-Cell from PQ Corporation, Valley Forge Executive Plaza, P.O. Box 840, Valley Forge, Pennsylvania 19482.

The organic solvent can be one which is compatible with the filled polyorganosiloxane sealant composition and which has low volatility. The organic solvents can be aliphatic hydrocarbons, ketones, and esters of low volatility. Triorganosiloxy endblocked polydiorganosiloxane fluids and polydiorganocyclosiloxanes may be used in conjuction with the organic solvent. These siloxane materials, however, are not desirable in places where staining is objectionable and where the additional cost is not tolerable. These siloxanes when used are preferably those in which all the organic groups are methyl. Preferably, the organic solvents are low volatile aliphatic hydrocarbons which have an average molecule weight of greater than 100.

The hydrolyzable groups of the polyorganosiloxane of the invention are bonded to silicon atoms and can be alkoxy groups, such as methoxy, ethoxy, propoxy, and isopropoxy; acyloxy groups, such as acetoxy, octanoyloxy, and benzoyloxy; ketoximo groups, such as dimethylketoximo, methylethylketoximo, and diethylketoximo; alkenyloxy groups, such as isopropenyloxy and 1-ethyl-2-methylvinyloxy; amino groups, such as dimethylamino, diethylamino, butylamino, and cyclohexylamino; aminoxy groups, such as N,N-dimethylaminoxy and N,N-diethylaminoxy; and amido groups, such as N-methylacetamido, N-ethylacetamido, N-methylbenzamido, N-phenylacetamido, and N-t-butylacetamido. These hydrolyzable groups illustrate the many kinds of hydrolyzable groups known in the art which can be used in room temperature curing polyorganosiloxane sealant compositions. These groups can either form the endblocking groups on the polyorganosiloxane, be the groups on the crosslinkers, and/or can be the groups on the chain-extender.

The filled polyorganosiloxane sealant compositions are made from polydiorganosiloxanes which are endblocked with hydroxyl groups or siloxy units having two or three hydrolyzable groups attached to the silicon atom. The organic groups on the polydiorganosiloxane can be any of those found in the prior art including the hydrocarbon groups, such as alkyl groups, such as methyl, ethyl, propyl, and butyl; cycloalkyl groups, such as cyclopentyl and cyclohexyl; alkenyl groups, such as vinyl and allyl; aryl groups, such as phenyl, tolyl, and naphthyl; and aralkyl groups, such as 2-phenylethyl. Preferably, the polydiorganosiloxane is polydimethylsiloxane and if other groups are present they are present in small amounts because they increase the cost of the sealant. The filler in the filled polyorganosiloxane sealant compositions can be either reinforcing or non-reinforcing. Although the non-reinforcing fillers are preferred, the use of reinforcing fillers can be beneficial to the resulting properties of some compositions. Combinations of reinforcing filler, such as fumed silica, and non-reinforcing filler such as calcium carbonate can be used.

The preferred filled polyorganosiloxane sealant composition of the invention is a two package room temperature composition as described by Toporcer et al. in U.S. Patent No. 3,817,909, issued June 18, 1974, which shows the sealant compositions and the method of making them. These compositions will be referred to as amidosilicon compositions and comprise products made by mixing hydroxyl endblocked polydiorganosiloxane, diorganodiamidosilane as chain-extender, aminoxy silicon compound as crosslinker, and non-acidic, non-reinforcing filler.

The diorganodiamidosilane, chain-extender, can be methylvinyldi-(N-methylacetamido)silane, dimethyldi-(N-methylacetamido)silane, methylphenyldi-(N-methylacetamido)silane, methylvinyldi-(N-ethylacetamido)silane, dimethyldi-(N-ethylacetamido)silane, methylphenyldi-(N-ethylacetamido)silane, methylvinyldi-(N-phenylacetamido)silane, dimethyldi-(N-phenylacetamido)silane, methylphenyldi-(N-phenylacetamido)silane, and methylvinyldi(N-methylbenzamido)silane. Preferably, the diorganodiamidosilane is one of the formula

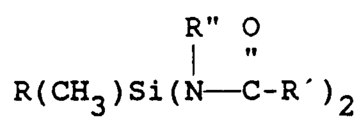

in which each R is methyl or vinyl radical; each R′ is a lower alkyl radical or phenyl radical; and each R″ is methyl or phenyl.

The aminoxysilicon compound, crosslinker, can be one in which there is from 1 to 100 silicon atoms per molecule and from 3 to 10 silicon-bonded aminoxy groups per molecule. The aminoxy group can be represented by the group -OX wherein X is a monovalent amine radical, $-N(R''')_2$, or heterocyclic amine. Aminoxysilicon compounds include monoorganotriaminoxysilanes, and siloxanes such as 1,1,3-tri-(N,N-diethylamino)-1,3,3-trimethyldisiloxane,

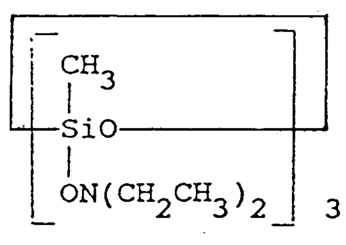

,

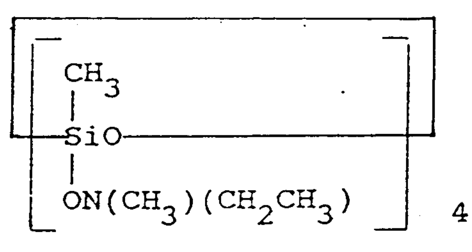

and copolymers having two or more siloxane units of the following illustrative group, $CH_3\{(CH_3CH_2)_2NO\}SiO$, $(CH_3)_2SiO$, $(CH_3)_3SiO_{0.5}$, $\{(CH_3CH_2)_2NO\}(CH_3)_2SiO_{0.5}$, $C_6H_5\{(CH_3CH_2)_2NO\}SiO$, $(CH_2=CH)(CH_3)SiO$, $CH_3SiO_{1.5}$, $CH_3\{(CH_3)_2NO\}SiO$, and $CH_3\{(C_6H_5)(CH_3)NO\}SiO$.

The fillers in these amidosilicon compositions are non-acidic and non-reinforcing. Examples of such fillers include calcium carbonate, ferric oxide, non-acidic carbon black, diatomaceous earth, alumina, hydrated alumina, titanium dioxide, glass microballoons, organic fillers, resins such as silicone resins, crushed quartz, and calcium sulfate. These fillers are present in amounts of at least 10 weight percent based on the total weight of the composition. Amounts of from 15 to 60 weight percent are preferred and the preferred filler is calcium carbonate. These fillers can be treated, for example the calcium carbonate can be treated with calcium stearate.

Although the preferred amidosilicon compositions are those which are packaged in two packages, one

package compositions of the amidosilicon composition type are also included in this invention and the same kinds of properties as obtained for the two package compositions are obtainable from the one package compositions.

The amidosilicon compositions can be made by mixing the defined ingredients. Those compositions which are two package compositions can be made by mixing the hydroxyl endblocked polydiorganosiloxane and filler and using this as one package and mixing the diorganodiamidosilane and the aminoxysilicon compound and using this as the second package. The aminoxysilicon compound and diorganodiamidosilane are mixed under essentially anhydrous conditions and stored under essentially anhydrous conditions until cure is desired. When cure is desired, the two packages are mixed and allowed to cure.

The amidosilicon compositions can be one package compositions which are made by mixing the hydroxyl endblocked polydiorganosiloxane and filler to make a mixture with the filler well dispersed. A suitable mixture can be obtained in one hour using commercial mixers. The resulting mixture is preferably deaired and then a mixture of the diorganodiamidosilane and the aminoxysilicon compound is added and mixed with the polymer and filler mixture. This mixing is done under essentially anhydrous conditions and then the resulting composition is put into containers for storage under essentially anhydrous conditions. Once these one package compositions are made, they are stable for as long as one year if essentially moisture free conditions are maintained, and they will cure to silicone elastomers when exposed to moisture at room temperature. Although these methods of making the one package or two package compositions are preferred, the methods of making these compositions are not very critical. The most significant feature is the essentially anhydrous conditions required for mixing and storage wherein either or both the diorganodiamidosilane and aminoxysilicon compounds are involved.

The amidosilicon compositions of the present invention do not require a catalyst to aid in curing and it is observed that many of the conventional curing catalysts used in room temperature vulcanizable silicone elastomer compositions are detrimental to the curing of the compositions.

Amidosilicon compositions are also described by Klosowski in U.S. Patent No. 3,996,184, issued December 7, 1976, which shows further compositions within the scope of the present invention. Klosowski teaches the use of a polar solvent to improve the freeze-thaw and slump characteristics of the amidosilicon compositions. The polar solvents taught by klosowski are N,N-dimethylformamide, acetonitrile, and N-n-butylacetamide. Klosowski also teaches that the polydiorganosiloxane can be a mixture of polymers of different molecular weights, such as blends of low viscosity polymers with polymers of gum viscosity.

The combination of the ceramic microspheres and organic solvent provide sealants which can be used for weatherproofing in building construction. The ceramic microspheres reduce the density of the sealant and at the same time appear to provide reinforcement as observed from the physical properties. The organic solvents allow the sealant compositions to maintain their extrudability without substantially changing the other properties of the sealant composition and the resulting cured sealant. The ceramic microspheres do not break during production compounding of the sealant composition as do many of the other beads and balloons such as the glass balloons of the prior art. Many of the organic balloons collapse or provide other adverse effects such as poor weathering. Still other materials of low specific gravity cause the sealant compositions to become so stiff that they cannot be extruded out of their storage container and the addition of enough diluent to make them extrudable is unacceptable because of the effect on the other properties. For example, if large amounts of organic solvent are used to obtain a satisfactory degree of extrudability, the composition shrinks so much during the curing process that the sealant composition no longer acts as a seal. Additionally, if the organic solvent does not evaporate, it slowly extrudes from the sealant and the surrounding building materials are seriously discolored and damaged. The present combination of ceramic microspheres and organic solvent results in the unexpected effect properties of maintaining satisfactory extrudability, together with satisfactory physical and chemical properties.

The use of drying oils in the present compositions can add increased adhesion to masonry materials. The amount of such drying oils should be kept to a minimum, such as up to 2 weight percent based on the weight of the total composition. The drying oils include esters of fatty acids, such as condensation products of higher molecular weight unsaturated fatty acids, such as oleic, linoleic, linolenic, oleostearic, licanic, ricinoleic, and arachidonic acids, with alcohols such as methanol, ethanol, ethylene glycol, propylene glycol, butylene glycol, trimethylolpropane, glycerol, trimethylolethane, pentaerytritol, sorbitol. Examples of natural occurring drying oils include linseed oil, tung oil, soybean oil, castor oil, dehydrated castor oil, fish oil, hempseed oil, cottonseed oil, and tall oil.

The compositions of the present invention can be pigmented to desirable colors. The pigments might be added directly to the composition for one package types, in one of the packages of two package types, or the pigments might be mixed with some polyorganosiloxane and packaged separately to be added to

provide a particular color selected for the application.

The following examples are for illustrative purposes. In the examples, "parts" denotes "parts by weight", "percent" is "percent by weight", and the viscosities shown are measured at 25 ° C.

EXAMPLE 1

Compositions of the present invention were made by mixing hydroxyl endblocked polydimethylsiloxane having a viscosity of 50 Pa•s (measured HAF #2, at 2 rpm) (hereinafter referred to as Polymer); an aliphatic hydrocarbon solvent having a closed cup flash point of 71 ° C., an average molecular weight of 191, a viscosity of 0.00246 Pa•s, and a refractive index of 1.4362 (hereinafter referred to as Organic Solvent); and calcium carbonate. The resulting mixture was termed a base and the amounts of materials used were as shown in Table I.

Several bases were made using different materials of low density as described below (hereinafter referred to as Low Density Material):

A. Ceramic microspheres (Q-Cell) having a bulk density in the range of 368 to 432 $kg/m^3$, a true density in the range of 593 to 705 $kg/m^3$, particle diameters in the range of 50 to 300 micrometers, and a melting point of 1200 ° C.;

B. Polyethylene particles having a density of 920 $kg/m^3$; from Allied Corporation, Columbia Road & Park Avenue, Morristown, New Jersey 07960;

C. Perlite, untreated, Ryo-lex 48; from Silbrico Corporation, 6300 River Road, Hodgkins, Illinois 60525;

D. Perlite, untreated; Ryo-lex 39; from Silbrico Corporation, 6300 River Road, Hodgkins, Illinois 60525;

E. Silane-treated perlite, Sil-42BC; from Silbrico Corporation, 6300 River Road, Hodgkins, Illinois 60525;

F. Polyvinyl chloride particles having a density of 590 $kg/m^3$; Vista Chem Company, 15990 N. Barker's Landing Road, Houston, Texas 77224;

G. Glass bubbles, soda-lime borosilicate, having a density of 230 $kg/m^3$; Minnesota Mining & Manufacture Co., 3M Center, St. Paul, Minnesota 55144;

H. Alumina silica microspheres, ceramic microspheres, having a density of 700 $kg/m^3$, Fillite; Fillite USA, P.O. Box 3074, Huntington, West Virginia 25702;

The ingredients were mixed in a Ross mixer under a vacuum to obtain a homogeneous base. The base was put into Semco cartridges, which allowed moisture to be kept out, and aminoxysilicon compound, methylvinyldi-(N-methylacetamido)silane (hereinafter referred to Amido Silane), and N,N-dimethylformamide (DMF) were admixed. The aminoxysilicon compound was a polymer having an average of two trimethylsiloxy units, three dimethylsiloxane units, and five units of the formula

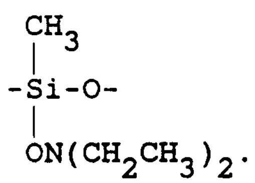

The amounts shown in Table I are in weight percent based on the total weight of the composition. After the base was mixed with the crosslinker and the chain extender, test quantities of the resulting compositions were exposed to moisture and the physical properties were measured. The extrusion rate was determined by Military Specification Mil-S-7502 with the results in grams per minute (g/min). The slump was determined by ASTM-D-2202 with the results in millimeters (mm). The durometer was determined by ASTM-D-2240-64T on the Shore A scale. The tensile strength at break, the elongation at break, the 150% modulus were determined by ASTM-D-412 with the results in MPa, percent extension, and MPa respectively. The skin-over time was determined by observing the time lapsed between the deposition of the composition with exposure to ambient moisture and the point at with the surface was dry to a light touch with a finger. The specific gravity was determined on the uncured sealant and is in $g/cm^3$. The properties observed are shown in Table II.

Comparative Composition 6 used polyethylene filler which was high in density and expensive. Composition 6 showed a slight reduction in specific gravity, but putting in more of the polyethylene filler (Composition 4) did reduce the specific gravity but it also inhibited the cure as evident from the low values for durometer and tensile strength and the long skinover time.

Comparative Compositions 5, 7, 8, and 11 contained perlite filler which lowered the elongation and

because the perlite particles did not adhere to the polymers, it separated and the resulting compositions were not homogeneous.

Composition 9 which used polyvinyl chloride (PVC) particles did not reduce the specific gravity. The PVC filler was also expensive and no cost advantage would be realized by using it.

Comparative Composition 10 which used glass microballoons lowered the specific gravity if laboratory equipment was used. The laboratory mixing equipment was able to mix under low shear conditions whereas when production equipment was used the shear was sufficiently high that the microballoons broke. The properties shown in Table II for Composition 10 were obtained from a composition made using laboratory equipment. If the glass microballoons break, the specific gravity is not lowered.

## EXAMPLE 2

Sealant compositions were prepared as described in Example 1. The ingredients were the same, except that the low density material in each composition of this example was the ceramic microspheres defined as A. The amounts shown in Table III are in weight percent. The properties were measured as defined in Example 1 and were observed as shown in Table IV. Comparative Compositions 16 and 17 showed that the organic solvent should be present in an amount of at least 2% to maintain an adequate extrusion rate.

## EXAMPLE 3

Compositions were prepared by mixing under anhydrous conditions hydroxyl endblocked polydimethylsiloxane as defined in Example 1, hydroxyl endblocked polymethylphenylsiloxane having an average degree of polymerization of six (hereinafter referred to as Polymer-1), fumed silica, calcium carbonate filler, organic solvent as defined in Example 1, ceramic microspheres A as defined in Example 1, methyltrimethoxysilane (methoxy silane), diisopropyl-bis(ethoxyacetylacetate)titanate, and aminosilane of the formula $(CH_3O)_3SiCH_2CH_2CH_2NHCH_2CH_2NH_2$. The compositions were made with the amounts of the materials as shown in Table V. The properties were measured as described in Example 1 and the results observed were as shown in Table VI.

## EXAMPLE 4

Sealant compositions were prepared as described in Example 1, the ingredients were the same except some of the compositions contained tung oil and their amounts were as described in Table VII. The properties were measured as described in Example I and were observed to be as described in Table VIII, with the exception that the performance was measured by ASTM C-719 at +/- 40% joint movement where the results were either pass or fail. Fail is adhesive failure to concrete and pass is no failure. Comparative Compositions 22, 27, and 29 showed that at least 2% organic solvent was required to provide an adequate extrusion rate. The presence of the tung oil in Compositions 23, 25, and 30 showed that it improved the adhesion to concrete.

TABLE I

| COMPOSITION | POLYMER | ORGANIC SOLVENT | $CaCO_3$ | LOW DENSITY MATERIAL | AMINOXY SILICON COMPOUND | AMIDO SILANE | DMF |
|---|---|---|---|---|---|---|---|
| 1. | 34.3 | 5.4 | 52.5 | 3.8A | 1.21 | 2.12 | 0.60 |
| 2. | 32.2 | 7.7 | 49.2 | 7.2A | 1.13 | 1.99 | 0.56 |
| 3. | 33.3 | 6.5 | 50.9 | 5.6A | 1.17 | 2.06 | 0.58 |
| 4.** | 33.1 | 5.2 | 50.5 | 7.4B | 1.16 | 2.04 | 0.58 |
| 5.** | 33.6 | 8.1 | 51.3 | 3.2C | 1.18 | 2.07 | 0.59 |
| 6.** | 34.3 | 5.4 | 52.5 | 3.8B | 1.21 | 2.12 | 0.60 |
| 7.** | 34.3 | 5.4 | 52.5 | 3.8D | 1.21 | 2.12 | 0.60 |
| 8.** | 33.3 | 6.5 | 50.9 | 5.6D | 1.17 | 2.06 | 0.58 |
| 9.** | 34.3 | 5.4 | 52.5 | 3.8F | 1.21 | 2.12 | 0.60 |
| 10.* | 34.3 | 5.4 | 52.5 | 3.8G | 1.21 | 2.12 | 0.60 |
| 11.** | 34.3 | 5.4 | 52.5 | 3.8E | 1.21 | 2.12 | 0.60 |
| 12. | 34.3 | 5.4 | 52.5 | 3.8H | 1.21 | 2.12 | 0.60 |
| CONTROL | 43.2 | --- | 51.3 | --- | 1.8 | 2.89 | 0.81 |

*Glass bubbles broke during the mixing step in the Ross mixer.
**Comparative Examples.

TABLE II

| COMPOSITION | DUROMETER | TENSILE STRENGTH MPa | ELONGATION % | MODULUS 150% MPa | SKIN OVER TIME, min | EXTRUSION RATE, g/min | SLUMP, mm | UNCURED SPECIFIC GRAVITY $g/cm^3$ |
|---|---|---|---|---|---|---|---|---|
| 1. | 15 | 0.455 | 1076 | 0.241 | 60 | 202 | NIL | 1.38 |
| 2. | 18 | 0.434 | 668 | 0.276 | 40 | 282 | NIL | 1.34 |
| 3. | 19 | 0.462 | 928 | 0.283 | 31 | 204 | NIL | 1.38 |
| 4. | 7 | 0.207 | 648 | 0.152 | 75 | 230 | NIL | 1.36 |
| 5. | 17 | 0.372 | 516 | 0.276 | 55 | 229 | NIL | 1.37 |
| 6. | 12 | 0.441 | 989 | 0.221 | 50 | 226 | 1.27 | 1.43 |
| 7. | 20 | 0.490 | 527 | 0.352 | 35 | 179 | 1.27 | 1.42 |
| 8. | 26 | 0.476 | 357 | 0.393 | 30 | 143 | 0.51 | 1.39 |
| 9. | 17 | 0.61 | 1270 | 0.324 | 47 | 210 | 2.54 | 1.47 |
| 10.* | 25 | 0.434 | 487 | 0.345 | 20 | 120 | 2.54 | 1.28 |
| 11. | 28 | 0.462 | 568 | 0.345 | 17 | 134 | NIL | 1.43 |
| 12. | 19 | 0.531 | 1047 | 0.255 | 35 | 207 | 2.03 | 1.42 |
| CONTROL | 15 | --- | 1200 | 0.241 | --- | --- | NIL | 1.46 |

*Glass bubbles broke during the mixing step in the Ross mixer.
**Comparative Examples.

TABLE III

| COMPOSITION | POLYMER | ORGANIC SOLVENT | $CaCO_3$ | LOW DENSITY MATERIAL | AMINOXY SILICON COMPOUND | AMIDO SILANE | DMF |
|---|---|---|---|---|---|---|---|
| 13. | 34.5 | 6.9 | 52.8 | 3.1 | 0.92 | 1.49 | 0.31 |
| 14. | 36.1 | 7.2 | 46.2 | 8.7 | 0.55 | 0.89 | 0.33 |
| 15. | 33.2 | 6.6 | 50.8 | 8.0 | 0.51 | 0.82 | --- |
| 16.** | 36.5 | 1.8 | 55.8 | 3.3 | 0.98 | 1.58 | --- |
| 17.** | 37.8 | 1.9 | 48.3 | 9.1 | 1.01 | 1.63 | 0.34 |
| 18. | 40.7 | 2.0 | 52.0 | 3.7 | 0.62 | 1.00 | --- |

TABLE IV

| COMPOSITION | DUROMETER | TENSILE STRENGTH MPa | ELONGATION % | MODULUS 50% MPa | EXTRUSION RATE, g/min | SLUMP, mm | SPECIFIC GRAVITY $g/cm^3$ |
|---|---|---|---|---|---|---|---|
| 13. | 19 | 0.648 | 890 | 0.255 | 182 | 1.27 | 1.38 |
| 14. | 23 | 0.579 | 480 | 0.283 | 118 | 6.35 | 1.20 |
| 15. | 20 | 0.634 | 522 | 0.352 | 106 | 2.54 | 1.30 |
| 16. | 21 | 0.621 | 867 | 0.283 | 61 | 1.27 | 1.45 |
| 17. | 22 | 0.655 | 546 | 0.283 | 51 | NIL | 1.30 |
| 18. | 18 | 0.738 | 952 | 0.255 | 117 | 1.27 | 1.39 |

TABLE V

| INGREDIENT | COMPOSITION 19. | COMPOSITION 20. | CONTROL |
|---|---|---|---|
| POLYMER | 29.6 | 28.4 | 30.0 |
| POLYMER-1 | 1.01 | 0.96 | 1.0 |
| SILICA | 3.7 | 3.5 | 3.8 |
| $CaCO_3$ | 52.3 | 50.2 | 53.0 |
| ORGANIC SOLVENT | 8.9 | 8.5 | --- |
| CERAMIC MICROSPHERES | 2.0 | 6.0 | --- |
| METHOXY SILANE | 1.86 | 1.79 | 1.9 |
| TITANATE | 0.62 | 0.60 | 0.63 |
| AMINO SILANE | 0.06 | 0.06 | 0.06 |

TABLE VI

| PROPERTY | COMPOSITION 19. | COMPOSITION 20. | CONTROL |
|---|---|---|---|
| DUROMETER | 41 | 43 | 49 |
| TENSILE STRENGTH, MPa | 1.048 | 0.986 | 1.110 |
| ELONGATION, % | 389 | 223 | 420 |
| MODULUS AT 100%, MPa | 0.738 | 0.820 | 0.765 |
| EXTRUSION RATE, g/min | 275 | 170 | 322 |
| SLUMP, mm | 2.54 | 2.54 | 2.54 |
| SPECIFIC GRAVITY, $g/cm^3$ | 1.5 | 1.4 | 1.5 |

TABLE VII

| COMPOSITION | POLYMER | ORGANIC SOLVENT | $CaCO_3$ | LOW DENSITY MATERIAL | AMINOXY SILICON COMPOUND | AMIDO SILANE | DMF | TUNG OIL |
|---|---|---|---|---|---|---|---|---|
| 21. | 34.5 | 6.9 | 52.8 | 3.1 | 0.92 | 1.48 | 0.3 | --- |
| 22.** | 36.5 | 1.8 | 55.8 | 3.3 | 1.00 | 1.60 | --- | --- |
| 23. | 34.5 | 6.9 | 52.8 | 3.1 | 0.54 | 0.86 | 0.3 | 1.0 |
| 24. | 40.7 | 2.0 | 52.0 | 3.7 | 0.61 | 0.99 | --- | --- |
| 25. | 37.5 | 7.5 | 47.9 | 3.4 | 1.00 | 1.60 | --- | 1.1 |
| 26. | 33.2 | 6.6 | 50.8 | 8.0 | 0.50 | 0.80 | --- | --- |
| 27.** | 34.1 | 1.7 | 52.2 | 8.2 | 0.92 | 1.48 | 0.3 | 1.0 |
| 28. | 36.1 | 7.2 | 46.2 | 8.7 | 0.54 | 0.86 | 0.3 | --- |
| 29.** | 37.8 | 1.9 | 48.3 | 9.1 | 1.00 | 1.60 | 0.3 | --- |
| 30. | 35.5 | 7.1 | 45.4 | 8.5 | 0.96 | 1.54 | --- | 1.1 |

TABLE VIII

| COMPOSITION | DUROMETER | TENSILE STRENGTH MPa | ELONGATION % | MODULUS 50% MPa | MODULUS 100% MPa | MODULUS 150% MPa | SKIN OVER TIME, min. | UNCURED SPECIFIC GRAVITY g/cm$^3$ | EXTRUSION RATE, g/min | ADHESION ASTM C-719 |
|---|---|---|---|---|---|---|---|---|---|---|
| 21. | 19 | 0.648 | 890 | 0.255 | 0.296 | 0.338 | 53 | 1.39 | 182 | FAIL |
| 22. | 21 | 0.620 | 867 | 0.283 | 0.331 | 0.372 | 32 | 1.45 | 61 | FAIL |
| 23. | 21 | 0.758 | 496 | 0.283 | 0.331 | 0.386 | 40 | 1.38 | 250 | PASS |
| 24. | 20 | 0.738 | 952 | 0.255 | 0.303 | 0.352 | 20 | 1.38 | 117 | FAIL |
| 25. | 24 | 0.745 | 487 | 0.269 | 0.324 | 0.379 | 50 | 1.39 | 127 | PASS |
| 26. | 20 | 0.634 | 522 | 0.352 | 0.407 | 0.455 | 15 | 1.37 | 106 | FAIL |
| 27. | 30 | 0.758 | 338 | 0.345 | 0.427 | 0.510 | 12 | 1.38 | 53 | FAIL |
| 28. | 23 | 0.579 | 480 | 0.283 | 0.338 | 0.379 | 25 | 1.20 | 118 | FAIL |
| 29. | 22 | 0.655 | 546 | 0.283 | 0.345 | 0.400 | 15 | 1.30 | 51 | FAIL |
| 30. | 20 | 0.696 | 408 | 0.290 | 0.345 | 0.407 | 60 | 1.28 | 228 | PASS |

## Claims

1. A syntactic sealant composition comprising in admixture a filled polydiorganosiloxane sealant composition which is curable at room temperature and comprises a polydiorganosiloxane terminated with hydroxyl groups or groups hydrolyzable to hydroxyl, a diorganodiamidosilane and an aminoxysilicon

compound having from 1 to 100 silicon atoms per molecule and from 3 to 10 silicon-bonded aminoxy groups per molecule, at least 10 weight percent of a filler, from 3 to 10 weight percent of ceramic microspheres having a true specific gravity of less than 1000 kg/$m^3$, a bulk density of less then 500 kg/$m^3$ and an average diameter of less than 500 micrometers, and from 2 to 15 weight percent of an organic solvent selected from aliphatic hydrocarbons, ketones and esters which is compatible with the polyorganosiloxane sealant composition and has a low volatility, where the weight percentages are based on the total weight of the syntactic sealant composition.

**2.** A composition in accordance with claim 1 in which the filler is a non-reinforcing filler.

**3.** The syntactic sealant composition according to claim 1 or 2, in which the polydiorganosiloxane is polydimethylsiloxane and the diorganodiamidosilane has the formula:

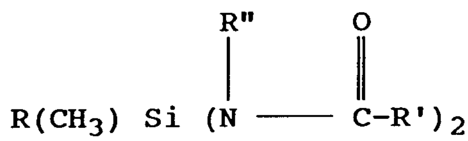

in which each R is a methyl or vinyl radical; each R' is a lower alkyl radical or phenyl radical; and each R'' is methyl or phenyl.

**4.** A syntactic sealant composition in accordance with any of claims 1 to 3, further comprising up to 2 weight percent of a drying oil based on the total weight of the composition.

**5.** A syntactic sealant composition in accordance with claim 4, in which the drying oil is tung oil.

**6.** A method of making a syntactic sealant composition comprising mixing to homogeneity under anhydrous conditions a polydiorganosiloxane which is curable at room temperature and is terminated with hydroxyl groups or groups hydrolyzable to hydroxyl, a diorganodiamidosilane, an aminoxy silicon compound having from 1 to 100 silicon atoms per molecule and from 3 to 10 silicon-bonded aminoxy groups per molecule, at least 10 weight percent of a filler, from 3 to 10 weight percent of ceramic microspheres having a true specific gravity of less than 1000 kg/$m^3$, a bulk density of less than 500 kg/$m^3$, and an average diameter of less than 500 micrometers, and from 2 to 15 weight percent of an organic solvent selected from aliphatie hydrocarbons, ketones and esters which is compatible with polyorganosiloxane sealant compositions and has a low volatility, where the weight percentages are based on the total weight of the syntactic sealant composition, and thereafter placing the homogeneously mixed composition into a container which will protect it from moisture.

**7.** A method according to claim 6, where the diorganodiamidosilane and the aminoxy silicon compound are in the same container optionally with a portion of the said polydiorganosiloxane, provided these ingredients are present in amounts such that the number of diorganodiamidosilane molecules exceeds the number of hydroxyl groups.

**Patentansprüche**

**1.** Syntaktische Dichtungszusammensetzung, enthaltend eine Mischung einer gefüllten Polydiorganosiloxandichtungszusammensetzung, die bei Raumtemperatur härtbar ist und ein Polydiorganosiloxan enthält, das endständige Hydroxylgruppen oder zu Hydroxyl hydrolysierbare Gruppen aufweist, ein Diorganodiamidsilan und eine Aminoxysiliziumverbindung, die 1-100 Siliziumatome pro Molekül und von 3-10 an Silizium gebundene Aminoxygruppen pro Molekül aufweist, mindestens 10 Gew.-% eines Füllstoffes, 3-10 Gew.-% keramischer Mikrokugeln mit einer wahren spezifischen Dichte von kleiner als 1000 kg/$m^3$, einer Schüttdichte von kleiner als 500 kg/$m^3$ und einem mittleren Durchmesser von kleiner 500 $\mu$m und 2-15 Gew.-% eines organischen Lösungsmittels, ausgewählt aus aliphatischen Kohlenwasserstoffen, Ketonen und Estern, das mit der Polyorganosiloxandichtungszusammensetzung verträglich ist und eine niedrige Flüchtigkeit aufweist, wobei sich die Gewichtsprozente auf Gesamtgewicht der syntaktischen Dichtungszusammensetzung beziehen.

2. Syntaktische Dichtungszusammensetzung nach Anspruch 1,
**dadurch gekennzeichnet,**
daß der Füllstoff ein nichtverstärkender Füllstoff ist.

3. Syntaktische Dichtungszusammensetzung nach Anspruch 1 oder 2,
**dadurch gekennzeichnet,**
daß das Polydiorganosiloxan Polydimethylsiloxan ist und das Diorganodiamidsilan der Formel genügt:

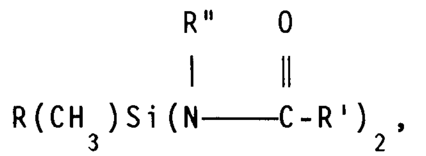

in der jedes $R^3$ ein Methyl- oder Vinylrest ist, jedes R' eine niedere Alkylgruppe oder der Phenylrest ist und jedes R" Methyl oder Phenyl ist.

4. Syntaktische Dichtungszusammensetzung nach jedem der Ansprüche 1-3,
**dadurch gekennzeichnet,**
daß sie weiterhin bis zu 2 Gew.-%, bezogen auf Gesamtgewicht der Zusammensetzung, eines trocknenden Öles enthält.

5. Syntaktische Dichtungszusammensetzung nach Anspruch 4,
**dadurch gekennzeichnet,**
daß das trocknende Öl Tungöl ist.

6. Verfahren zum Herstellen einer syntaktischen Dichtungszusammensetzung durch homogenes Mischen unter wasserfreien Bedingungen eines bei Raumtemperatur härtbaren Polydiorganosiloxans mit endständigen Hydroxylgruppen oder mit zu Hydroxyl hydrolysierbaren Gruppen, eines Diorganodiamidsilans, einer Aminoxysiliziumverbindung mit 1-100 Siliziumatomen pro Molekül und mit 3-10 an Silizium gebundenen Aminoxygruppen pro Molekül, mindestens 10 Gew.-% eines Füllstoffes, von 3-10 Gew.-% keramischer Mikrokugeln mit einer wahren spezifischen Dichte von kleiner als 1000 kg/m$^3$, einer Schüttdichte von kleiner als 500 kg/m$^3$ und einem mittleren Durchmesser von kleiner 500 $\mu$m und 2-15 Gew.-% eines organischen Lösungsmittels, ausgewählt aus aliphatischen Kohlenwasserstoffen, Ketonen und Estern, das mit der Polyorganosiloxandichtungszusammensetzung verträglich ist und eine niedrige Flüchtigkeit aufweist, wobei sich die Gewichtsprozente auf Gesamtgewicht der syntaktischen Dichtungszusammensetzung beziehen, und anschließendes Anordnen der homogen gemischten Zusammensetzung in einem Behälter, der sie vor Feuchtigkeit schützt.

7. Verfahren nach Anspruch 6,
**dadurch gekennzeichnet,**
daß das Diorganodiamidsilan und die Aminoxysiliziumverbindung im gleichen Behälter angeordnet sind, gegebenenfalls mit einem Teil des Polydiorganosiloxans, unter der Bedingung, daß diese Bestandteile in Mengen vorhanden sind, daß die Zahl der Diorganodiamidsilanmoleküle die Zahl der Hydroxylgruppen überschreitet.

**Revendications**

1. Une composition d'étanchéité syntactique comprenant, en mélange, une composition d'étanchéité à base de polydiorganosiloxane chargé qui est durcissable à la température ambiante et comprend un polydiorganosiloxane terminé par des groupes hydroxyle ou des groupes hydrolysables en groupes hydroxyle, un diorganodiamidosilane et un composé aminoxysilicié ayant 1 à 100 atomes de silicium par molécule et 3 à 10 groupes aminoxy liés au silicium par molécule, au moins 10 pour cent en poids d'une charge, 3 à 10 pour cent en poids de microsphères céramiques ayant une masse volumique réelle inférieure à 1000 kg/m$^3$, une masse volumique apparente inférieure à 500 kg/m$^3$ et un diamètre moyen inférieur à 500 micromètres, et 2 à 15 pour cent en poids d'un solvant organique choisi parmi les hydrocarbures aliphatiques, les cétones et les esters, qui est compatible avec la composition de mastic de polyorganosiloxane et dont la volatilité est faible, les pourcentages en poids étant exprimés

par rapport au poids total de la composition de d'étanchéité syntactique.

**2.** Une composition selon la revendication 1, dans laquelle la charge est une charge non renforçante.

**3.** La composition d'étanchéité syntactique selon la revendication 1 ou 2, dans laquelle le polydiorganosiloxane est un polydiméthylsiloxane et le diorganodiamidosilane répond à la formule :

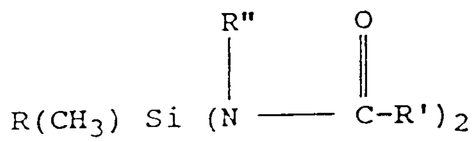

dans laquelle chaque R est un radical méthyle ou vinyle ; chaque R' est un radical alkyle inférieur ou un radical phényle ; et chaque R'' est un radical méthyle ou phényle.

**4.** Une composition d'étanchéité syntactique selon l'une quelconque des revendications 1 à 3, comprenant de plus jusqu'à 2 pour cent en poids d'une huile siccative par rapport au poids total de la composition.

**5.** Une composition d'étanchéité syntactique selon la revendication 4, dans laquelle l'huile siccative est l'huile de Canton.

**6.** Un procédé de fabrication d'une composition d'étanchéité syntactique, consistant à mélanger jusqu'à homogénéité, en conditions anhydres, un polydiorganosiloxane qui est durcissable à la température ambiante et qui est terminé par des groupes hydroxyle ou des groupes hydrolysables en groupes hydroxyle, un diorganodiamidosilane, un composé aminoxysilicié ayant 1 à 100 atomes de silicium par molécule et 3 à 10 groupes aminoxy liés au silicium par molécule, au moins 10 pour cent en poids d'une charge, 3 à 10 pour cent en poids de microsphères céramiques ayant une masse volumique réelle inférieure à 1000 kg/$m^3$, une masse volumique apparente inférieure à 500 kg/$m^3$ et un diamètre moyen inférieur à 500 micromètres, et 2 à 15 pour cent en poids d'un solvant organique choisi parmi les hydrocarbures aliphatiques, les cétones et les esters, qui est compatible avec les compositions d'étanchéité à base de polyorganosiloxane et dont la volatilité est faible, les pourcentages en poids étant exprimés par rapport au poids total de la composition d'étanchéité syntactique, puis à placer la composition mélangée de façon homogène dans un récipient qui la protège contre l'humidité.

**7.** Un procédé selon la revendication 6, dans lequel le diorganodiamidosilane et le composé aminoxysilicié se trouvent dans le même récipient, facultativement avec une partie dudit polydiorganosiloxane, à condition que ces ingrédients soient présents en des quantités telles que le nombre de molécules de diorganodiamidosilane dépasse le nombre de groupes hydroxyle.